(19) Europäisches Patentamt / European Patent Office / Office européen des brevets

(11) **EP 4 632 865 A1**

(12) **EUROPEAN PATENT APPLICATION**
published in accordance with Art. 153(4) EPC

(43) Date of publication:
**15.10.2025 Bulletin 2025/42**

(21) Application number: **24802551.2**

(22) Date of filing: **07.02.2024**

(51) International Patent Classification (IPC):
**H01M 10/058** (2010.01)     **H01M 10/0565** (2010.01)
**H01M 10/0525** (2010.01)

(52) Cooperative Patent Classification (CPC):
Y02E 60/10

(86) International application number:
**PCT/CN2024/076661**

(87) International publication number:
**WO 2024/230263 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.05.2023 CN 202310512326**

(71) Applicant: **Contemporary Amperex Technology Co., Limited**
**Ningde, Fujian 352100 (CN)**

(72) Inventors:
• **HE, Xiaoning**
**Ningde, Fujian 352100 (CN)**
• **XUE, Wenwen**
**Ningde, Fujian 352100 (CN)**
• **SONG, Shaokang**
**Ningde, Fujian 352100 (CN)**
• **LIU, Chengyong**
**Ningde, Fujian 352100 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **BATTERY CELL, BATTERY, AND ELECTRIC APPARATUS**

(57)    A battery cell (5), a battery, and an electric apparatus are provided. The battery cell (5) includes: a negative electrode plate (20) having a length of a in a first direction, where the negative electrode plate (20) has a first end (201) and a second end (202); and a gel polymer electrolyte (40) at least located between a positive electrode plate (10) and the negative electrode plate (20); where when a capacity of the battery cell (5) is less than or equal to 90% of a nominal capacity of the battery cell (5), a first region (203) exists on the negative electrode plate (20), a distance between a point in the first region (203) farthest from the first end (201) and the first end (201) is $\frac{1}{10}a$ , a second region (204) exists on the negative electrode plate (20), an area of the second region (204) is the same or substantially the same as an area of the first region (203), and a distance between a point in the second region (204) farthest from the second end (202) and the second end (202) is $\frac{1}{10}a$ ; and in a temperature range of 25°C to 180°C, a heat loss amount of the negative electrode plate (20) located in the first region (203) is m, and a heat loss amount of the negative electrode plate (20) located in the second region (204) is n, where m/n is greater than or equal to 50%.

FIG. 1

**Description**

**TECHNICAL FIELD**

This disclosure relates to the field of batteries, and specifically, to a battery cell, a battery, and an electric apparatus.

**BACKGROUND**

In recent years, as the application scope of secondary batteries has become increasingly broad, secondary batteries have been widely applied in energy storage power systems such as hydroelectric, thermal, wind, and solar power stations, as well as in various fields including electric tools, electric bicycles, electric motorcycles, electric vehicles, military equipment, and aerospace. However, as the application scope of secondary batteries continues to expand, the cycling performance of secondary batteries faces significant challenges. Currently, lithium-ion batteries still encounter numerous issues in industrial production and application that remain to be addressed.

**SUMMARY**

According to a first aspect of this application, this application proposes a battery cell including: an electrode assembly, where the electrode assembly includes: a positive electrode plate and a negative electrode plate, the negative electrode plate has a length of a in a first direction, the negative electrode plate has a first end and a second end, and a direction from the first end to the second end is the same as the first direction; and a gel polymer electrolyte, where the gel polymer electrolyte is at least located between the positive electrode plate and the negative electrode plate; where when a capacity of the battery cell is less than or equal to 90% of a nominal capacity of the battery cell, a first region with an area of

$\pi(\frac{1}{20}a)^2 \ mm^2$ exists on the negative electrode plate, a distance between a point in the first region farthest from the first end and the first end is $\frac{1}{10}a$, a second region exists on the negative electrode plate, an area of the second region is the same or substantially the same as the area of the first region, and a distance between a point in the second region farthest from the second end and the second end is $\frac{1}{10}a$; and in a temperature range of 25°C to 180°C, a heat loss amount of the negative electrode plate located in the first region is m, and a heat loss amount of the negative electrode plate located in the second region is n, where m/n is greater than or equal to 50%. Thus, forming the gel polymer electrolyte with high elasticity by in-situ curing between the positive electrode plate and the negative electrode plate can effectively alleviate pressure caused by swelling of the negative electrode plate, so that an electrolyte is not easily squeezed out from one side of the negative electrode plate, the wettability of the electrolyte to the negative electrode plate remains high throughout an entire charge-discharge cycle, and the electrolyte gasifies and detaches from the negative electrode plate within the temperature range of 25°C to 180°C, thus testing the heat loss amounts of the negative electrode plates in specific regions within the temperature range of 25°C to 180°C can directly reflect the electrolyte amounts in the corresponding regions. When a difference in heat loss amounts between an upper region and a lower region of the negative electrode plate is small, an overall wettability of the negative electrode plate is high, thereby enabling the battery cell to exhibit excellent cycling performance.

According to an embodiment of this application, the m/n is greater than or equal to 70%. Thus, a difference in the electrolyte amount between upper and lower ends of the negative electrode plate is small, the wettability of the electrolyte to the negative electrode plate is good, and the battery cell exhibits excellent cycling performance.

According to an embodiment of this application, a first included angle exists between the first direction and a second direction, and the first included angle is 70° to 90°. Thus, the battery cell can be arranged close to or directly perpendicular to the ground, optimizing an arrangement of the battery cell and improving space utilization.

According to an embodiment of this application, the first included angle is 85° to 90°. Thus, the battery cell can be further arranged closer to or directly perpendicular to the ground, optimizing the arrangement of the battery cell and improving space utilization.

According to an embodiment of this application, the gel polymer electrolyte includes a polymer matrix, the polymer matrix is obtained by polymerization of polymer monomers, the polymer monomers include a first monomer and a second monomer, and the first monomer includes at least two crosslinking sites. Thus, the first monomer can not only initiate a polymerization reaction of the second monomer but also crosslink multiple polymer chains formed by polymerization of the second monomer, thereby improving the elasticity of the polymer matrix.

According to an embodiment of this application, the crosslinking site includes at least one of a double bond, a triple bond, and a cyclic ether. Thus, a crosslinking effect of the first monomer is good, further improving the elasticity of the polymer matrix.

According to an embodiment of this application, the first monomer includes at least one of an acrylic monomer and an acrylate monomer. Thus, a crosslinking state of the polymer matrix can be improved.

According to an embodiment of this application, the first monomer satisfies one or more of the following conditions: the acrylic monomer includes at least one of acrylic acid, methacrylic acid, methyl methacrylate, butyl methacrylate, methyl acrylate, ethyl acrylate, hydroxyethyl acrylate, hydroxyethyl methacrylate, butyl acrylate, isodecyl acrylate, isooctyl acrylate, lauryl acrylate, isobornyl acrylate, isobornyl methacrylate, and ethoxyethoxyethyl acrylate; the acrylate monomer includes at least one of cyanoacrylate, caprolactone acrylate, 2-phenoxyethyl acrylate, tetrahydrofurfuryl acrylate, ethoxylated tetrahydrofurfuryl acrylate, cyclic trimethylolpropane acrylate, 2-carboxyethyl acrylate, cyclohexyl acrylate, ethylene glycol diacrylate, ethylene glycol dimethacrylate, propylene glycol dimethacrylate, diethylene glycol diacrylate, diethylene glycol dimethacrylate, triethylene glycol diacrylate, triethylene glycol dimethacrylate, tetraethylene glycol diacrylate, tetraethylene glycol dimethacrylate, 1,4-butanediol diacrylate, 1,4-butanediol dimethacrylate, 1,3-butanediol diacrylate, 1,3-butanediol dimethacrylate, 1,6-hexanediol diacrylate, 1,6-hexanediol dimethacrylate, dipropylene glycol diacrylate, dipropylene glycol dimethacrylate, tripropylene glycol diacrylate, tripropylene glycol dimethacrylate, neopentyl glycol diacrylate, neopentyl glycol dimethacrylate, 2(propoxylated) neopentyl glycol diacrylate, ethylene glycol diacrylate oligomer, ethylene glycol dimethacrylate oligomer, propylene glycol dimethacrylate oligomer, cyclohexyl acrylate oligomer, methoxy polyethylene glycol acrylate, ethoxylated trimethylolpropane triacrylate, trimethylolpropane trimethacrylate, methoxy ethylene glycol methacrylate oligomer, pentaerythritol triacrylate, propoxylated glycerol triacrylate, tris(2-hydroxyethyl) isocyanurate triacrylate, di(trimethylolpropane) tetraacrylate, pentaerythritol tetraacrylate, 4(ethoxylated) pentaerythritol tetraacrylate, and dipentaerythritol hexaacrylate. Thus, the crosslinking state of the polymer matrix can be further improved, improving the elasticity of the polymer matrix.

According to an embodiment of this application, the second monomer includes at least one of a carbonate monomer, a sulfate monomer, a sulfonate monomer, a phosphate monomer, a carboxylate monomer, a sulfone monomer, an amide monomer, a nitrile monomer, and an ether monomer. Thus, the strength of the polymer matrix can be improved.

According to an embodiment of this application, the second monomer satisfies one or more of the following conditions: the carbonate monomer includes at least one of vinylene carbonate, ethylene ethyl carbonate, ethylene carbonate, propylene carbonate, butylene carbonate, fluoroethylene carbonate, and chloroethylene carbonate; the sulfate monomer includes at least one of vinyl ethylene sulfite, vinyl sulfite, 4-methyl vinyl sulfate, and 4-ethyl vinyl sulfate; the sulfonate monomer includes at least one of 1,3-propylene sultone, 1,3-propane sultone, 1,4-butane sultone, and methylene methane disulfonate; the phosphate monomer includes at least one of dimethyl vinyl phosphate, diethyl vinyl phosphate, diethyl propenyl phosphate, diethyl butenyl phosphate, diethyl 1-butene-2-yl phosphonate, diethyl ethynyl phosphate, vinyl trifluoromethyl phosphate, vinyl-1-trifluoroethyl phosphate, diethyl fluorovinyl phosphate, and 1-trifluoropropenyl ethyl phosphate; the carboxylate monomer includes vinyl acetate; the sulfone monomer includes at least one of methyl vinyl sulfone, ethyl vinyl sulfone, cyclobutene sulfone, cyclobutane sulfone, and ethylene sulfoxide; the amide monomer includes acrylamide; the nitrile monomer includes at least one of acrylonitrile, succinonitrile, glutaronitrile, and adiponitrile; the ether monomer includes at least one of 1,3-dioxolane, ethylene oxide, 1,2-propylene oxide, 4-methyl-1,3-dioxolane, tetrahydrofuran, 2-methyltetrahydrofuran, 1,4-dioxane, ethylene glycol dimethyl ether, ethylene glycol diglycidyl ether, and triethylene glycol divinyl ether. Thus, the strength of the polymer matrix can be further improved.

According to an embodiment of this application, a mass of the electrolyte is c, a mass of the polymer matrix is b, and $c/(c+b)$ is 60% to 97%. Thus, the electrolyte amount in the battery cell is high, further improving the cycling performance of the battery cell.

According to an embodiment of this application, the $c/(c+b)$ is 80% to 95%. Thus, the cycling performance of the battery cell can be further improved.

According to an embodiment of this application, a housing is further included, where the housing is configured to seal the electrode assembly and the gel polymer electrolyte; and when a state of charge of the battery cell is less than 5%, a volume of the electrode assembly is $V_1$, and a volume of the battery housing is $V_2$, where $V_1/V_2$ is less than or equal to 92%. Thus, the structural stability and usage reliability of the battery cell can be improved.

According to an embodiment of this application, the negative electrode plate includes a negative electrode current collector and a negative electrode active material layer located on at least one surface of the negative electrode current collector, the negative electrode active material layer includes a negative electrode active material, and the negative electrode active material includes at least one of natural graphite, artificial graphite, soft carbon, hard carbon, silicon-based material, tin-based material, and lithium titanate. Thus, an energy density of the negative electrode plate can be increased.

According to an embodiment of this application, the negative electrode active material satisfies one or more of the following conditions: the silicon-based material includes at least one of elemental silicon, silicon oxide, silicon-carbon composite, silicon-nitrogen composite, and a silicon alloy material; and the tin-based material includes at least one of elemental tin, tin oxide, and a tin alloy material. Thus, the energy density of the negative electrode plate can be increased.

According to a second aspect of this application, this application proposes a battery including the battery cell described above. Thus, the battery has all the features and advantages of the battery cell described above, which are not repeated here.

According to a third aspect of this application, this application proposes an electric apparatus including the battery cell described above and/or the battery described above. Thus, the electric apparatus has all the features and advantages of the battery cell and the battery described above, which are not repeated here.

## BRIEF DESCRIPTION OF DRAWINGS

The above and/or additional aspects and advantages of this application will become apparent and readily understandable from the description of embodiments in conjunction with the following drawings.

FIG. 1 shows a schematic structural diagram of a battery cell according to an embodiment of this application;
FIG. 2 shows a schematic structural diagram of a negative electrode plate according to an embodiment of this application;
FIG. 3 shows a schematic diagram of a battery cell according to an embodiment of this application;
FIG. 4 is an exploded view of the battery cell according to the embodiment of this application shown in FIG. 3;
FIG. 5 shows a schematic diagram of a battery module according to an embodiment of this application;
FIG. 6 shows a schematic diagram of a battery pack according to an embodiment of this application;
FIG. 7 is an exploded view of the battery pack according to the embodiment of this application shown in FIG. 6; and
FIG. 8 shows a schematic diagram of an electric apparatus using a battery as a power source according to an embodiment of this application.

Description of reference signs:

battery pack 1; upper box body 2; lower box body 3; battery module 4; battery cell 5;
positive electrode plate 10; positive electrode current collector 11; positive electrode active material layer 12; negative electrode plate 20; negative electrode current collector 21; negative electrode active material layer 22; separator 30; gel polymer electrolyte 40; housing 51; electrode assembly 52; top cap assembly 53;
first end 201; second end 202; first region 203; and second region 204.

## DESCRIPTION OF EMBODIMENTS

Embodiments of this application are described in detail below, examples of the embodiments are shown in the accompanying drawings, where the same or similar reference numerals throughout indicate the same or similar elements or elements having the same or similar functions. The embodiments described below with reference to the accompanying drawings are illustrative and merely for explaining this application, and cannot be construed as any limitation on this application.

In the description of this application, it should be noted that terms indicating orientation or positional relationships such as "length", "width", "thickness", "upper", "lower", "front", "rear", "left", and "right" are based on the orientation or positional relationships shown in the drawings, and are merely for ease and brevity of description of the embodiments of this application rather than indicating or implying that the means or elements mentioned must have specific orientations or must be constructed or manipulated according to specific orientations, and therefore shall not be construed as any limitation on the embodiments of this application.

In the description of this application, "A and/or B" may include any one of the cases of A alone, B alone, and both A and B, where A and B are used only as examples and may be any technical features connected by "and/or" as used in this application.

In the description of this application, "a plurality of" means at least two.

Unless otherwise specified, all scientific and technical terms used in this application have the same meanings as commonly understood by persons skilled in the technical field to which this application belongs. All patents and published documents related to this application are incorporated into this application by reference in their entirety. The terms "contain" or "include" are open-ended expressions, meaning that the content specified in this application is included, but content in other aspects is not excluded.

In the description of this application, regardless of whether words such as "approximately" or "about" are used, all numbers disclosed here are approximate values. The value of each number may exhibit a difference of 10% or less or a reasonable difference as considered by persons skilled in the art, such as a difference of 1%, 2%, 3%, 4%, or 5%.

In the description of this application, when A and B are both numerical values, A being the same as B indicates that A and B are completely identical, and A being substantially the same as B indicates that a difference of 10% or less exists between A and B or a reasonable difference as considered by persons skilled in the art, such as a difference of 1%, 2%, 3%, 4%, or 5%.

In this application, taking a metal battery using a liquid electrolyte as an example, during charging of a battery cell 5, metal active ions deintercalate from a positive electrode active material, diffuse through the electrolyte, migrate to a surface of a negative electrode plate 20, and intercalate into a negative electrode active material; during discharging of the battery cell 5, metal active ions deintercalate from the negative electrode active material, diffuse through the electrolyte, migrate to a surface of positive electrode plate 10, and intercalate into the positive electrode active material; and the negative electrode active material undergoes volume expansion due to intercalation of metal active ions and volume contraction due to deintercalation of metal active ions during the charge-discharge process, thereby causing the negative electrode active material to continuously undergo volume changes during the charge-discharge cycle of the battery cell 5.

In some embodiments, taking a negative electrode active material with significant volume expansion during the charge-discharge cycle, such as a silicon-based negative electrode active material, as an example, a volume of a negative electrode plate 20 containing the silicon-based negative electrode active material is at a minimum value c1 when the battery cell 5 is in a fully discharged state, the volume of the negative electrode plate 20 containing the silicon-based negative electrode active material reaches a maximum value c2 when the battery cell 5 is in a fully charged state, and a volume change rate c2/c1 of the negative electrode plate 20 containing the silicon-based negative electrode active material during the charge-discharge cycle can reach 300% or more. The negative electrode plate 20 exhibits a significant volume effect during the charge-discharge cycle. During the charging process of the battery cell 5, an internal swelling force within the battery cell 5 increases as the volume of the negative electrode plate 20 increases, and an electrolyte inside the negative electrode plate 20 is gradually squeezed out along one side of the negative electrode plate 20. For example, when the battery cell 5 is positioned perpendicular to the ground, during the charging process of the battery cell 5, an electrolyte inside the negative electrode plate 20 is gradually squeezed out along an upper region of the negative electrode plate 20, accumulating in a swelling space reserved inside the battery cell 5; during the discharging process of the battery cell 5, the squeezed-out electrolyte cannot return to the negative electrode plate 20 in time, resulting in reduced wettability of the electrolyte to the upper region of the negative electrode plate 20, ultimately leading to lithium precipitation; in the early stage of lithium precipitation, lithium nuclei maintain good contact with the negative electrode plate, and the precipitated metallic lithium further grows into lithium dendrites; and in subsequent cycles, the tops of the lithium dendrites become deactivated, turning into elemental lithium that cannot participate in the charge-discharge cycle, thereby significantly affecting the cycle life and capacity of the battery cell.

Full charge refers to a state where a state of charge of the battery cell 5 is 100%; certainly, full charge can also refer to a state where the state of charge of the battery cell 5 is another value, for example, a state where the state of charge is greater than 90%, and this application imposes no limitation in this regard. Full discharge refers to a state where the state of charge of the battery cell 5 is 0%; certainly, full discharge can also refer to a state where the state of charge of the battery cell 5 is another value, for example, a state where the state of charge is less than 5%, and this application imposes no limitation in this regard.

A nominal capacity of a battery cell refers to a capacity delivered when a fully charged battery cell at room temperature is discharged at a rate of 1C, where the current corresponding to the 1C rate discharge is the current required to fully discharge the battery cell in 1 hour.

In this application, replacing a liquid electrolyte with a gel polymer electrolyte utilizes a space-occupying effect of a polymer matrix in the gel polymer electrolyte, effectively mitigating the issue where the electrolyte inside the battery cell is squeezed out during internal pressure expansion, leading to poor wettability of the negative electrode plate and consequently leading to a significant decline in the cycling performance of the battery cell.

In some embodiments, after an electrode assembly is installed into a housing of the battery cell, an electrolyte containing polymer monomers is injected into the battery cell, the interior of the battery cell 5 is infiltrated with the electrolyte containing polymer monomers, and external conditions, such as heat treatment, trigger a curing reaction of the polymer monomers to form a polymer matrix, thereby ensuring that the interior of the battery cell 5 is filled with a gel polymer electrolyte 40 composed of the polymer matrix and the electrolyte. The polymer matrix, compared to a liquid electrolyte, has higher elasticity and pressure-bearing capacity, capable of rebounding to an original state as much as possible after bearing pressure.

In this application, forming the gel polymer electrolyte with high elasticity by in-situ curing between a positive electrode plate and a negative electrode plate, partially replacing the liquid electrolyte with the polymer matrix, enables that during the charge-discharge cycle of the battery cell 5, when the negative electrode plate 20 swells, the polymer matrix effectively alleviates pressure caused by the swelling of the negative electrode plate 20, so that the electrolyte is not easily squeezed out from an upper region of the negative electrode plate 20, the wettability of the electrolyte to the upper region of negative electrode plate 20 remains high throughout the entire charge-discharge cycle, maintaining an ion pathway in the upper region of the negative electrode plate 20, effectively suppressing growth of lithium dendrites on the surface of the negative electrode plate 20, and effectively improving the cycling performance of the battery cell 5.

The battery cell disclosed in the embodiments of this application can be, but is not limited to being, used in electric apparatuses such as vehicles, ships, or aircraft. The battery cell, battery, and the like disclosed in this application may be used to constitute a power source system of the electric apparatus.

An embodiment of this application provides an electric apparatus using a battery cell and/or a battery as a power source. The electric apparatus may be but is not limited to a mobile phone, a tablet computer, a notebook computer, an electric toy, an electric tool, an electric motorcycle, an electric vehicle, a ship, a spacecraft, or the like. The electric toy may include a fixed or mobile electric toy, for example, a gaming console, an electric toy car, an electric toy ship, and an electric toy airplane toy; and the spacecraft may include an airplane, a rocket, a space shuttle, and a spaceship.

It should be noted that the technical solutions described in the embodiments of this application are not limited to being applicable only to the battery cell and electric apparatus described above, but can also be applicable to all batteries including battery cells and electric apparatuses using batteries. However, for brevity of description, the following embodiments are all described by taking an electric vehicle as an example.

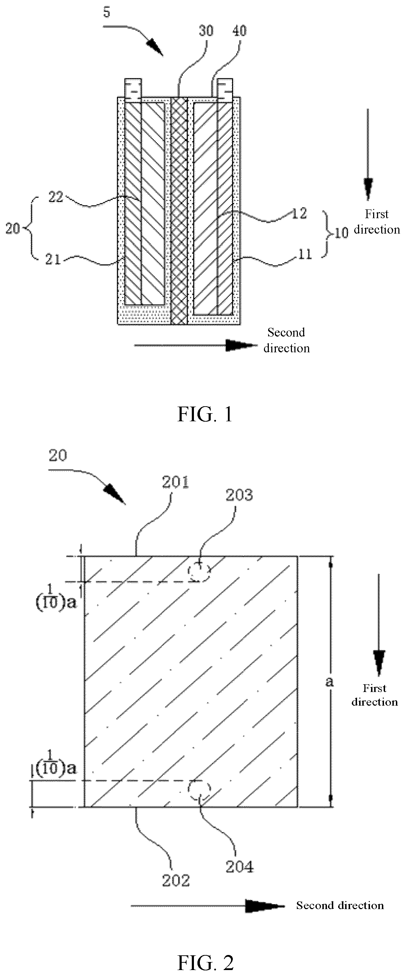

According to a first aspect of this application, referring to FIG. 1 and FIG. 2, this application proposes a battery cell 5 including: an electrode assembly, where the electrode assembly includes: a positive electrode plate 10 and a negative electrode plate 20, where the negative electrode plate 20 has a length of a in a first direction, the negative electrode plate 20 has a first end 201 and a second end 202, and a direction from the first end 201 to the second end 202 is the same as the first direction; a gel polymer electrolyte 40, where the gel polymer electrolyte 40 is located between the positive electrode plate 10 and the negative electrode plate 20; where when a capacity of the battery cell 5 is less than or equal to 90% of a nominal capacity of the battery cell 5, a first region 203 with an area of $\pi(\frac{1}{20}a)^2 \; mm^2$ exists on the negative electrode plate 20, a distance between a point in the first region 203 farthest from the first end 201 and the first end 201 is $\frac{1}{10}a$, a second region 204 exists on negative electrode plate 20, an area of the second region 204 is the same or substantially the same as the area of the first region 203, and a distance between a point in the second region 204 farthest from the second end 202 and the second end 202 is $\frac{1}{10}a$; and in a temperature range of 25°C to 180°C, a heat loss amount of the negative electrode plate 20 located in the first region 203 is m, and a heat loss amount of the negative electrode plate 20 located in the second region 204 is n, where m/n is greater than or equal to 50%. Using the gel polymer electrolyte 40 can utilize a space-occupying effect of a polymer matrix in the gel polymer electrolyte, effectively mitigating the issue where the electrolyte inside the battery cell is squeezed out during internal pressure expansion, leading to poor wettability of the negative electrode plate, thereby effectively reducing lithium precipitation on one side of the negative electrode plate 20 caused by poor electrolyte wettability during the charge-discharge process of the battery, and improving cycling performance.

In some embodiments, forming the gel polymer electrolyte with high elasticity by in-situ curing between the positive electrode plate and the negative electrode plate enables the polymer matrix to effectively alleviate pressure caused by swelling of the negative electrode plate 20, so that the electrolyte is not easily squeezed out from one side of negative electrode plate 20, the wettability of the electrolyte to the negative electrode plate 20 remains high throughout the entire charge-discharge cycle, manifested as high electrolyte amounts in the negative electrode plate 20 in the first region 203 and the negative electrode plate 20 in the second region 204; when the capacity of the battery cell 5 is less than or equal to 90% of the nominal capacity of the battery cell 5, meaning that the battery cell 5 has undergone several charge-discharge cycles, a difference in electrolyte amount between a region of the negative electrode plate 20 near the first end 201 and a region near the second end 202 is small. Specifically, the electrolyte gasifies and detaches from the negative electrode plate 20 within the temperature range of 25°C to 180°C, so that testing the heat loss amounts of the negative electrode plates 20 in specific regions within the temperature range of 25°C to 180°C can directly reflect the electrolyte amounts in the corresponding regions.

As an example, when the heat loss amount of the negative electrode plate 20 within the temperature range of 25°C to 180°C is tested, the negative electrode plate 20 can be gradually heated from 25°C to 180°C until the electrolyte is completely volatilized.

In the embodiments of this application, a second direction may be parallel to a plane on which the battery cell 5 is placed, for example, the second direction may be parallel to the ground.

In some embodiments, a first included angle exists between the first direction and the second direction, the first included angle may be 70° to 90°, and optionally, the first included angle may be 85° to 90°. Thus, the battery cell can be arranged close to or directly perpendicular to the ground, optimizing an arrangement of the battery cell and improving space utilization. Specifically, when the included angle between the first direction and the second direction is 90°, the battery cell is positioned perpendicular to the ground at this time.

In the embodiments of this application, the battery cell 5 may be a metal battery. In some embodiments, the battery cell 5 may be a sodium metal battery, a lithium metal battery, or the like.

In some embodiments, the electrode assembly is a wound structure. The positive electrode plate 10 and the negative electrode plate 20 are wound to form the wound structure.

In some embodiments, the electrode assembly is a laminated structure.

As an example, a plurality of positive electrode plates 10 and a plurality of negative electrode plates 20 may be provided respectively, and the plurality of positive electrode plates 10 and the plurality of negative electrode plates 20 are alternately stacked.

As an example, a plurality of positive electrode plates 10 may be provided, the negative electrode plate 20 is folded to form a plurality of stacked folding segments, and one positive electrode plate 10 is sandwiched between adjacent folding segments.

As an example, both the positive electrode plate 10 and the negative electrode plate 20 are folded to form a plurality of stacked folding segments.

In some embodiments, a separator 30 is disposed between the positive electrode plate 10 and the negative electrode plate 20, primarily serving to prevent a short circuit between the positive and negative electrodes while allowing ions to pass through.

As an example, a plurality of separators 30 may be provided and are respectively disposed between any adjacent positive electrode plates 10 or negative electrode plates 20.

As an example, the separators 30 may be consecutively disposed and arranged between any adjacent positive electrode plates 10 or negative electrode plates 20 by folding or winding.

In some embodiments, a shape of the electrode assembly may be cylindrical, flat, or multi-prismatic, or the like.

In some embodiments, the electrode assembly is provided with tabs, and the tabs can conduct current from the electrode assembly. The tabs include a positive tab and a negative tab.

In some embodiments, the positive electrode plate 10 may include a positive electrode current collector 11 and a positive electrode active material layer 12 disposed on at least one surface of the positive electrode current collector 11.

As an example, the positive electrode current collector 11 has two opposite surfaces in a thickness direction of the positive electrode current collector 11, and the positive electrode active material layer 12 is disposed on either one or both of the two opposite surfaces of the positive electrode current collector 11.

As an example, the positive electrode current collector 11 can use a metal foil, foamed metal, or a composite current collector. For example, as the metal foil, the positive electrode current collector may use silver surface-treated aluminum or stainless steel, stainless steel, copper, aluminum, nickel, baked carbon, carbon, nickel, titanium, or the like. The composite current collector may include a polymer material substrate and a metal layer. The foamed metal may be foamed nickel, foamed copper, foamed aluminum, foamed alloy, foamed carbon, or the like. The composite current collector may be formed by forming a metal material (aluminum, aluminum alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

In some embodiments, the negative electrode plate 20 may include a negative electrode current collector 21, and the negative electrode current collector 21 may use a metal foil, foamed metal, or a composite current collector. For example, as the metal foil, the negative electrode current collector may use silver surface-treated aluminum or stainless steel, stainless steel, copper, aluminum, nickel, baked carbon, carbon, nickel, titanium, or the like. The foamed metal may be foamed nickel, foamed copper, foamed aluminum, foamed alloy, foamed carbon, or the like. The composite current collector may include a polymer material substrate and a metal layer. The composite current collector may be formed by forming a metal material (copper, copper alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

In some embodiments, the negative electrode plate 20 may be a metal foil rolled or coated with metal powder of an inert layer on a surface of the current collector.

In some embodiments, the negative electrode current collector 21 may be a composite current collector. For example, the composite current collector may include at least one of a carbon cloth, a carbon film, a carbon material, a porous current collector, an alloy-modified current collector, a lithium-philic modified current collector, and a sodium-philic modified current collector.

In some embodiments, the negative electrode plate 20 may include a negative electrode current collector 21 and a negative electrode active material layer 22 disposed on at least one surface of the negative electrode current collector 21. The negative electrode active material layer 22 may include a negative electrode active material, and the negative electrode active material may be a material with a high gram capacity. For example, the negative electrode active material may include at least one of natural graphite, artificial graphite, soft carbon, hard carbon, a silicon-based material, a tin-based material, and lithium titanate.

As an example, the silicon-based material may include at least one of elemental silicon, silicon oxide, silicon-carbon composite, silicon-nitrogen composite, and a silicon alloy material; and the tin-based material may include at least one of elemental tin, tin oxide, and a tin alloy material.

This application imposes no particular limitation on the type of the separator 30, and any porous structure separator with good chemical stability and mechanical stability can be used.

As an example, a main material of the separator 30 may include at least one of glass fiber, non-woven fabric, polyethylene, polypropylene, ceramic, and polyvinylidene fluoride. The separator 30 may be a single-layer film or a multilayer composite film, with no particular limitation. When the separator 30 is a multilayer composite film, materials of the layers may be the same or different, with no particular limitation. The separator 30 may be a separate component located between the positive electrode plate 10 and the negative electrode plate 20, or may be attached to surfaces of the positive and negative electrodes.

In some embodiments, when the capacity of the battery cell 5 is less than or equal to 90% of the nominal capacity of the battery cell 5, the battery cell has undergone multiple charge-discharge cycles at this time, the negative electrode plate 20 correspondingly undergoes multiple reciprocal volume swellings and volume contractions, and the electrolyte inside the battery cell 5 undergoes multiple instances of being squeezed out under pressure and reflowing.

In some embodiments, the first direction may be parallel to a predetermined surface of the battery cell. For example, the first direction may be parallel to a large surface of the battery cell. In this case, a first included angle of 70° to 90° exists between the first direction and the second direction, meaning that an included angle of 70° to 90° can exist between the large surface of the battery cell 5 and the ground. For a wound battery cell as an example, two surfaces with a larger side area are referred to as large surfaces, and the other two side surfaces are referred to as narrow surfaces.

In some embodiments, a shape of the first region 203 is not particularly limited, as long as a distance between a point in the first region farthest from the first end 201 and the first end 201 is $\frac{1}{10}a$. For example, the shape of the first region 203 may be circular, rectangular, triangular, or the like. When the first region 203 is circular, only one point on a boundary of the first region 203 has a distance of $\frac{1}{10}a$ from the first end 201; and when first region 203 is rectangular or triangular, one point or multiple points on the boundary of the first region 203 may have a distance of $\frac{1}{10}a$ from the first end 201.

In some embodiments, a shape of the second region 204 is not particularly limited, as long as a distance between a point in the second region 204 farthest from the second end 202 and the second end 202 is $\frac{1}{10}a$. For example, the second region 204 may be circular, rectangular, triangular, or the like. When the second region 204 is circular, only one point on a boundary of the second region 204 has a distance of $\frac{1}{10}a$ from the second end 202; and when the second region 204 is rectangular or triangular, one point or multiple points on the boundary of the second region 204 may have a distance of $\frac{1}{10}a$ from the second end 202. In some specific embodiments, the first region 203 and the second region 204 have the same shape.

In some embodiments, the area of the first region 203 is the same or substantially the same as the area of the second region 204. For example, when a is greater than 50 mm, the area $\pi(\frac{1}{20}a)^2 \; \mathrm{mm}^2$ of the first region 203 and the second region 204 may be 19.625 mm², so that a disc of a predetermined diameter, such as a disc with a diameter of 5 mm, corresponding to the first region 203 and the second region 204 being circular in shape, can be obtained at a corresponding position of the negative electrode plate 20 through a relatively simple stamping process.

As an example, a differential scanning calorimeter (DSC) sample preparation device can be used, specifically, a disc with a diameter of 5 mm is obtained by punching with a mechanical mold.

As an example, a thermogravimetric analyzer can be used, specifically, the heat loss amounts of the negative electrode plate 20 in the first region 203 and the negative electrode plate 20 in the second region 204 within the temperature range of 25°C to 180°C are measured using a differential thermal-thermogravimetric analyzer.

In some embodiments, m/n may be greater than or equal to 70%. When the value of m/n is larger, a difference in electrolyte amount between a region of the negative electrode plate 20 near the first end 201 and a region near the second end 202 is smaller; and when the battery cell is positioned perpendicular to the ground, the wettability of an upper region and the wettability of a lower region of negative electrode plate 20 tend to be consistent.

As an embodiment, m/n may be 50%, 55%, 60%, 65%, 70%, 75%, 80%, 85%, 90%, 95%, 96%, or 97%. It can be understood that limited by an electrolyte injection coefficient of the battery cell, an electrolyte amount of the negative electrode plate 20 in the first region 203 is less than an electrolyte amount of the negative electrode plate 20 in the second region 204, meaning that m/n may be a value greater than or equal to 50% and less than 100%.

In some embodiments, the gel polymer electrolyte includes a polymer matrix, the polymer matrix is obtained by polymerization of polymer monomers, the polymer monomers include a first monomer and a second monomer, and the first monomer includes at least two crosslinking sites.

As an example, the first monomer can serve as a crosslinking agent, and the second monomer can polymerize to form a polymer chain. Since the first monomer includes at least two crosslinking sites, the first monomer can both initiate a polymerization reaction of the second monomer and crosslink multiple polymer chains formed by polymerization of the second monomer. In other words, the first monomer can be both a component of the polymer chain and a connecting structure for connecting multiple polymer chains.

As an example, the first monomer may include two crosslinking sites, and the first monomer with dual crosslinking sites can effectively improve a crosslinking state of the polymer matrix, effectively improving the elasticity of the polymer matrix, thereby making the gel polymer electrolyte more elastic when under pressure, further reducing the electrolyte in negative electrode plate 20 being squeezed out due to pressure.

In some embodiments, the crosslinking sites may include at least one of a double bond, a triple bond, and a cyclic ether.

In some embodiments, the first monomer may include at least one of an acrylic monomer and an acrylate monomer.

As an example, the acrylic monomer may include at least one of acrylic acid, methacrylic acid, methyl methacrylate, butyl methacrylate, methyl acrylate, ethyl acrylate, hydroxyethyl acrylate, hydroxyethyl methacrylate, butyl acrylate, isodecyl acrylate, isooctyl acrylate, lauryl acrylate, isobornyl acrylate, isobornyl methacrylate, and ethoxyethoxyethyl acrylate.

As an example, the acrylate monomer may include at least one of cyanoacrylate, caprolactone acrylate, 2-phenoxyethyl acrylate, tetrahydrofurfuryl acrylate, ethoxylated tetrahydrofurfuryl acrylate, cyclic trimethylolpropane acrylate, 2-carboxyethyl acrylate, cyclohexyl acrylate, ethylene glycol diacrylate, ethylene glycol dimethacrylate, propylene glycol dimethacrylate, diethylene glycol diacrylate, diethylene glycol dimethacrylate, triethylene glycol diacrylate, triethylene glycol dimethacrylate, tetraethylene glycol diacrylate, tetraethylene glycol dimethacrylate, 1,4-butanediol diacrylate, 1,4-butanediol dimethacrylate, 1,3-butanediol diacrylate, 1,3-butanediol dimethacrylate, 1,6-hexanediol diacrylate, 1,6-hexanediol dimethacrylate, dipropylene glycol diacrylate, dipropylene glycol dimethacrylate, tripropylene glycol diacrylate, tripropylene glycol dimethacrylate, neopentyl glycol diacrylate, neopentyl glycol dimethacrylate, 2(propoxylated) neopentyl glycol diacrylate, ethylene glycol diacrylate oligomer, ethylene glycol dimethacrylate oligomer, propylene glycol dimethacrylate oligomer, cyclohexyl acrylate oligomer, methoxy polyethylene glycol acrylate, ethoxylated trimethylolpropane triacrylate, trimethylolpropane trimethacrylate, methoxy ethylene glycol methacrylate oligomer, pentaerythritol triacrylate, propoxylated glycerol triacrylate, tris(2-hydroxyethyl) isocyanurate triacrylate, di(trimethylolpropane) tetraacrylate, pentaerythritol tetraacrylate, 4(ethoxylated) pentaerythritol tetraacrylate, and dipentaerythritol hexaacrylate.

As an example, an oligomer refers to a polymer with an average molecular weight of less than 10,000, and the oligomer can be obtained through an oligomerization reaction.

In some embodiments, the second monomer may include at least one of a carbonate monomer, a sulfate monomer, a sulfonate monomer, a phosphate monomer, a carboxylate monomer, a sulfone monomer, an amide monomer, a nitrile monomer, and an ether monomer.

In some embodiments, the carbonate monomer may include at least one of vinylene carbonate, ethylene ethyl carbonate, ethylene carbonate, propylene carbonate, butylene carbonate, fluoroethylene carbonate, and chloroethylene carbonate; the sulfate monomer may include at least one of vinyl ethylene sulfite, vinyl sulfite, 4-methyl vinyl sulfate, and 4-ethyl vinyl sulfate; the sulfonate monomer may include at least one of 1,3-propylene sultone, 1,3-propane sultone, 1,4-butane sultone, and methylene methane disulfonate; the phosphate monomer may include at least one of dimethyl vinyl phosphate, diethyl vinyl phosphate, diethyl propenyl phosphate, diethyl butenyl phosphate, diethyl 1-butene-2-yl phosphonate, diethyl ethynyl phosphate, vinyl trifluoromethyl phosphate, vinyl-1-trifluoroethyl phosphate, diethyl fluorovinyl phosphate, and 1-trifluoropropenyl ethyl phosphate; the carboxylate monomer may include vinyl acetate; the sulfone monomer may include at least one of methyl vinyl sulfone, ethyl vinyl sulfone, cyclobutene sulfone, cyclobutane sulfone, and ethylene sulfoxide; the amide monomer may include acrylamide; the nitrile monomer may include at least one of acrylonitrile, succinonitrile, glutaronitrile, and adiponitrile; and the ether monomer may include at least one of 1,3-dioxolane, ethylene oxide, 1,2-propylene oxide, 4-methyl-1,3-dioxolane, tetrahydrofuran, 2-methyltetrahydrofuran, 1,4-dioxane, ethylene glycol dimethyl ether, ethylene glycol diglycidyl ether, and triethylene glycol divinyl ether.

In some embodiments, a mass of the electrolyte is c, a mass of the polymer matrix is b, and c/(c+b) may be 60% to 97%. Optionally, c/(c+b) may be 80% to 95%.

Using the gel polymer electrolyte can effectively reduce the occurrence of uneven distribution of the electrolyte on the negative electrode plate in the later usage stages of the battery cell, achieving good cycling performance with less electrolyte, increasing a volumetric energy density of the battery cell, and reducing the occurrence of lithium precipitation. Using more electrolyte can achieve good cycling performance and reduce the occurrence of lithium precipitation.

As an example, c/(c+b) may be 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, or 97%.

In some embodiments, the electrolyte in the gel polymer electrolyte may include a solvent and an inorganic salt.

As an example, the solvent in the electrolyte may include at least one of ethyl methyl carbonate, diethyl carbonate, dimethyl carbonate, dipropyl carbonate, methyl propyl carbonate, ethyl propyl carbonate, methyl formate, methyl acetate, ethyl acetate, propyl acetate, methyl propionate, ethyl propionate, propyl propionate, methyl butyrate, ethyl butyrate, 1,4-butyrolactone, dimethyl sulfone, methyl ethyl sulfone, and diethyl sulfone.

As an example, the inorganic salt in the electrolyte may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluoro(oxalato)borate, lithium bis(oxalato)borate, lithium difluorophosphate, lithium difluoro(bisoxalato)phosphate, and lithium tetrafluoro(oxalato)phosphate.

In some embodiments, a housing is further included, the housing is configured to seal the electrode assembly and the gel polymer electrolyte; when a state of charge of the battery cell is less than 5%, a volume of the electrode assembly is $V_1$, and a volume of the battery housing is $V_2$, where $V_1/V_2$ is less than or equal to 92%.

Making the volume of the housing greater than the volume of the electrode assembly allows a swelling space to be reserved for the negative electrode plate 20 in the housing of the battery cell, reducing swelling and deformation of the housing due to swelling of the negative electrode plate until structural failure occurs. Partially replacing a liquid electrolyte with the gel polymer electrolyte can effectively reduce the phenomenon where the electrolyte of the negative electrode plate, after being squeezed out under pressure, accumulates in the swelling space reserved inside the battery cell 5.

As an example, when $V_1/V_2$ is greater than 92%, the swelling space reserved inside the housing of the battery cell is too small, and volume changes of the negative electrode plate during the charge-discharge process are directly reflected at the battery cell level, easily leading to defects such as swelling of the battery cell.

As an example, the housing of the battery cell 5 is configured to seal components such as the electrode assembly and the electrolyte. The housing may be a steel shell, an aluminum shell, a plastic shell (such as polypropylene), a composite metal shell (such as a copper-aluminum composite shell), an aluminum-plastic film, or the like.

As an example, a structure of the gel polymer electrolyte has strong plasticity, and a possibility of explosion in abnormal usage conditions such as overcharge, over-discharge, impact, crushing, and puncture is extremely low, making the gel polymer electrolyte suitable for manufacturing batteries of various shapes.

As an example, the battery cell may be a cylindrical battery cell, a prismatic battery cell, a pouch battery cell, or a battery cell of other shapes; the prismatic battery cell includes a square-shell battery cell, a blade-shaped battery cell, or a multi-prismatic battery. The multi-prismatic battery can be a hexagonal prismatic battery or the like, and this application imposes no particular limitation in this regard.

According to a second aspect of this application, this application proposes a battery including the battery cell 5 described above. Thus, the battery has all the features and advantages of the battery cell 5 described above, which are not repeated here.

Typically, the battery includes a positive electrode plate 10, a negative electrode plate 20, an electrolyte, and a separator 30, and the electrolyte may include gel polymer electrolyte 40 described above. During the charge-discharge process of the battery, active ions intercalate and deintercalate back and forth between the positive electrode plate 10 and the negative electrode plate 20. The electrolyte conducts ions between the positive electrode plate 10 and the negative electrode plate 20. A separator 30 is disposed between the positive electrode plate 10 and the negative electrode plate 20, primarily serving to prevent a short circuit between the positive and negative electrodes while allowing ions to pass through.

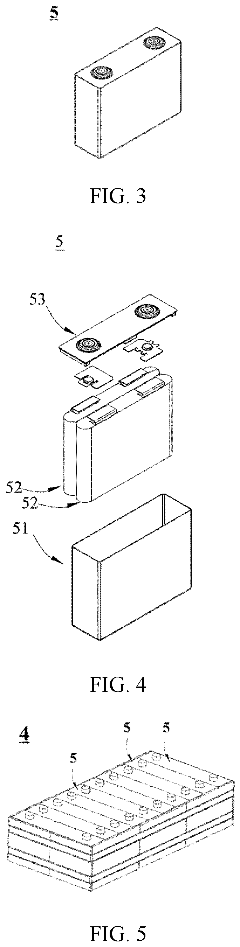

As an example, this application imposes no particular limitation on a shape of the battery, and the shape may be cylindrical, rectangular, or of any other shapes. For example, FIG. 3 shows a battery cell 5 with a rectangular structure as an example. Specifically, referring to FIG. 4, an outer package of the battery cell 5 may include a housing 51 and a top cap assembly 53. The housing 51 may include a base plate and a side plate connected onto the base plate, and the base plate and the side plate enclose an accommodating cavity. The housing 51 has an opening communicating with the accommodating cavity, and the top cap assembly 53 can cover the opening to seal the accommodating cavity.

As an example, the positive electrode plate 10, the negative electrode plate 20, and the separator 30 can form an electrode assembly 52 through a winding process or a lamination process. The electrode assembly 52 is encapsulated in the accommodating cavity, and the gel polymer electrolyte fills an internal space of the electrode assembly 52. One or more electrode assemblies 52 are included in battery cell 5, and persons skilled in the art can select according to specific actual needs.

As an example, the battery can be assembled into a battery module, one or more batteries may be included in the battery module, and the specific number can be selected by persons skilled in the art according to an application and capacity of the battery module. FIG. 5 shows a battery module 4 as an example. Referring to FIG. 5, in the battery module 4, a plurality of battery cells 5 can be sequentially arranged along a length direction of the battery module 4. Certainly, the plurality of battery cells 5 can alternatively be arranged in any other manner. Further, the plurality of battery cells 5 may be fastened through fasteners. The battery module 4 may alternatively include a casing with an accommodating space, and the plurality of battery cells 5 are accommodated in the accommodating space.

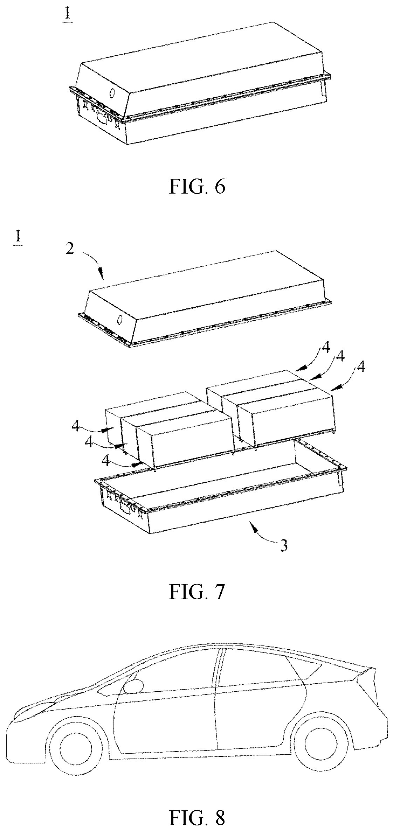

As an example, the battery module described above may alternatively be assembled into a battery pack, one or more battery modules are included in the battery pack, and the specific number can be selected by persons skilled in the art according to an application and capacity of the battery pack. FIG. 6 and FIG. 7 show a battery pack 1 as an example. Referring to FIG. 6 and FIG. 7, the battery pack 1 may include a battery box and a plurality of battery modules 4 disposed in the battery box. The battery box includes an upper box body 2 and a lower box body 3, where the upper box body 2 can cover the lower box body 3 and form an enclosed space for accommodating the battery modules 4. The plurality of battery modules 4 may be arranged in the battery box in any manner.

According to a third aspect of this application, this application proposes an electric apparatus including the battery cell 5 described above and/or the battery described above. Thus, the electric apparatus has all the features and advantages of the battery cell and the battery described above, which are not repeated here.

The battery, the battery module, or the battery pack can be used as a power source of the electric apparatus or as an energy storage unit of the electric apparatus. the electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto. The electric apparatus can select the battery, the battery module, or the battery pack according to usage needs of the electric apparatus.

As an example, FIG. 8 shows an electric apparatus as an example. The electric apparatus is a battery electric vehicle, a hybrid electric vehicle, a plug-in hybrid electric vehicle, or the like. To meet a demand of the electric apparatus for high power and high energy density of the battery, a battery pack or a battery module can be used.

As an example, the electric apparatus can alternatively be a mobile phone, a tablet computer, a notebook computer, or the like. The apparatus is typically required to be thin and light and can use the battery as its power source.

The solutions of this application are described below through specific examples. It should be noted that the following examples are only used to illustrate this application and should not be regarded as limiting a scope of this application. For specific techniques or conditions not specified in the examples, the techniques or conditions described in the literature in the art or according to product instructions are followed. The reagents or instruments used are all conventional products commercially available if no manufacturer is indicated.

Example 1

Preparation of positive electrode plate:

A positive electrode active material $LiNi_{0.5}Co_{0.2}Mn_{0.3}O_2$, a conductive agent carbon black (SuperP), and a binder polyvinylidene fluoride (PVDF) were mixed well in a solvent N-methylpyrrolidone (NMP) at a mass ratio of 91.6:1.8:6.6 to prepare a positive electrode slurry. Then, the prepared positive electrode slurry was applied on one surface of an aluminum foil current collector, with a coating surface density of 17.66 mg/cm$^2$. After the current collector was dried in an oven, the other side of the current collector was coated with the positive electrode slurry having the same weight as that applied on one surface, followed by drying and cold-pressing, to obtain a positive electrode plate.

Preparation of negative electrode plate:

A negative electrode active material graphite, a conductive agent carbon black (SuperP), a binder styrene-butadiene rubber (SBR), and a thickener sodium carboxymethyl cellulose (CMC-Na) were fully stirred and mixed in an appropriate amount of a solvent deionized water at a mass ratio of 95.4:1.5:2.5:0.6 to form a uniform negative electrode slurry. Then, the negative electrode slurry was uniformly applied on one surface of a copper foil current collector, with a coating surface density of 11.3 mg/cm$^2$. After the current collector was dried in an oven, the other side of the current collector was coated with the positive electrode slurry having the same weight as that applied on one surface, followed by drying and cold-pressing, to obtain a negative electrode plate.

Battery assembly:

A separator, the positive electrode plate, and the negative electrode plate were arranged in an order of the positive electrode plate, the separator, the negative electrode plate, and the separator, subjected to a winding process, and then hot-pressed at 80°C under a pressure of 1 MPa, where an electrode assembly had a size of 143*84*25 mm (that was, Vi=300.3 cm$^3$). Then, the electrode assembly was subsequently subjected to tab welding, encasing, and top cap welding processes, a hard-shell dry cell without electrolyte injected was assembled, where an internal size of the hard shell was 145*88*26 mm (that was, $V_2$=331.76 cm$^3$), and $V_1/V_2$ was 90.51%.

Ethylene carbonate (EC) and ethyl methyl carbonate (EMC) were mixed at a volume ratio of 3:7 to obtain an organic solvent, then lithium hexafluorophosphate (LiPF$_6$) was dissolved in the organic solvent described above to obtain an electrolyte A, where a concentration of LiPF$_6$ was 1 mol/L. Subsequently, the electrolyte A, a first monomer (ethylene glycol diacrylate oligomer, with a molecular weight of 400), a second monomer (ethylene ethyl carbonate), and an initiator (azobisisobutyronitrile) were prepared into a gel electrolyte at a weight ratio of 10:10:79.8:0.2. 110 g of the gel electrolyte was injected into the cell, then the cell was vacuumed to -20 kPa and held for 10 min, left standing at room temperature for 24 h, and charged to 4.0 V at a current of 3 A in an environment of 45°C. Then, formation of the cell was performed, and then the cell was discharged to 2.8 V at a current of 3A at room temperature to form a gel polymer electrolyte, thereby obtaining a battery.

Example 2

Example 2 was consistent with Example 1, with the difference being that the first monomer in Example 2 was triethylene glycol diacrylate.

Example 3

Example 3 was consistent with Example 1, with the difference being that the first monomer in Example 3 was ethoxylated trimethylolpropane triacrylate.

Example 4

Example 4 was consistent with Example 1, with the difference being that the first monomer in Example 4 was pentaerythritol tetraacrylate.

Example 5

Example 5 was consistent with Example 1, with the difference being that the second monomer in Example 5 was diethyl propenyl phosphate.

Example 6

Example 6 was consistent with Example 1, with the difference being that the second monomer in Example 6 was triethylene glycol divinyl ether.

Example 7

Example 7 was consistent with Example 1, with the difference being that the second monomer in Example 7 was ethyl vinyl sulfone.

Comparative example 1

Comparative example 1 was consistent with Example 1, with the difference being that Comparative example 1 used a liquid electrolyte, specifically, ethylene carbonate (EC) and ethyl methyl carbonate (EMC) were mixed at a volume ratio of 3:7 to obtain an organic solvent, then lithium hexafluorophosphate (LiPF$_6$) was dissolved in the organic solvent described above to obtain the electrolyte, where a concentration of LiPF$_6$ was 1 mol/L. An electrolyte injection amount was 110 g.

Comparative example 2

Comparative example 2 was consistent with Comparative example 1, with the difference being that the electrolyte injection amount in Comparative example 2 was 120 g.

The batteries in Examples 1 to 7 and Comparative examples 1 and 2 were tested as follows, and test results were shown in Table 1.

Number of cycles at 90% capacity retention rate: The battery was cycled once at a rate of 0.33C based on a design capacity, an actual capacity $C_0$ was measured, and the nominal capacity of the battery was calibrated accordingly. Subsequently, charge-discharge cycles were performed at a rate of 1C, a capacity delivered per cycle was recorded as $C_n$, and when $C_n/C_0=90\%$, the number of cycles was recorded as p, representing the number of cycles corresponding to 90% capacity retention rate.

Cycle life test: The battery was cycled once at a rate of 0.33C based on a design capacity, an actual capacity $C_0$ was measured, and the nominal capacity of the battery was calibrated accordingly. Subsequently, charge-discharge cycles were performed at a rate of 1C, a capacity delivered per cycle was recorded as $C_n$, and when $C_n/C_0$=80%, the number of cycles was recorded as q, representing the cycle life of the battery.

Heat loss amount test of negative electrode plate: When the battery reached 90% capacity retention rate after cycling, under a condition where the battery was at 0% SOC, the battery was disassembled, an outermost negative electrode plate of the electrode assembly was removed, small discs with a diameter of 5 mm were punched from the first region and the second region of the same electrode plate, samples were loaded into a test sample stage, and two identical devices (NETZSCH synchronous thermal analyzer STA-STA449F3) were used to test the first region and the second region respectively. The test procedure included processes of heating at 5°C/min to 70°C, keeping the temperature at 70°C for 30 min, and recording a mass loss m of the first region and a mass loss n of the second region throughout the process.

**Table 1**

| No. | Heat loss amount of first region m/(mg) | Heat loss amount of second region n/(mg) | m/n | Cycles corresponding to 90% capacity retention rate p (cycle) | Cycle life q (cycle) |
|---|---|---|---|---|---|
| Example 1 | 0.583 | 0.76 | 76.67% | 557 | 824 |
| Example 2 | 0.613 | 0.762 | 80.41% | 576 | 850 |
| Example 3 | 0.438 | 0.757 | 57.88% | 447 | 727 |
| Example 4 | 0.416 | 0.761 | 54.66% | 399 | 661 |
| Example 5 | 0.54 | 0.758 | 71.24% | 487 | 731 |
| Example 6 | 0.57 | 0.757 | 75.30% | 531 | 803 |
| Example 7 | 0.546 | 0.763 | 71.61% | 496 | 749 |
| Comparative example 1 | 0.324 | 0.952 | 34.03% | 338 | 527 |
| Comparative example 2 | 0.364 | 0.95 | 38.32% | 386 | 640 |

In the description of this specification, a description referring to terms such as "one embodiment", "another embodiment", and the like means that a specific feature, structure, material, or characteristic described in connection with the embodiment is included in at least one embodiment of this application. In this specification, schematic expressions of the terms described above do not necessarily refer to the same embodiment or example. In addition, the specific features, structures, materials, or characteristics described can be combined in any appropriate manner in any one or more embodiments or examples. Moreover, without mutual conflict, persons skilled in the art can incorporate and combine different embodiments or examples and features of the different embodiments or examples described in this specification.

In the description of this specification, the terms "first" and "second" are only used for descriptive purposes and cannot be understood as indicating or implying relative importance or implicitly indicating the number of technical features indicated. Although the embodiments of this application have been shown and described, it can be understood that these embodiments are illustrative and should not be construed as any limitations on this application. Persons of ordinary skill in the art can make changes, modifications, replacements, and transformations to the embodiments within the scope of this application.

**Claims**

1.  A battery cell, comprising:

    an electrode assembly, wherein the electrode assembly comprises: a positive electrode plate and a negative electrode plate, the negative electrode plate has a length of a in a first direction, the negative electrode plate has a first end and a second end, and a direction from the first end to the second end is the same as the first direction; and a gel polymer electrolyte, wherein the gel polymer electrolyte is at least located between the positive electrode plate and the negative electrode plate;
    wherein when a capacity of the battery cell is less than or equal to 90% of a nominal capacity of the battery cell, a first region with an area of less than or equal to $\pi(\frac{1}{20}a)^2 \ mm^2$ exists on the negative electrode plate, a distance between a point in the first region farthest from the first end and the first end is $\frac{1}{10}a$, a second region exists on the negative electrode plate, an area of the second region is the same or substantially the same as the area of the first region, and a distance between a point in the second region farthest from the second end and the second end is $\frac{1}{10}a$ ; and

in a temperature range of 25°C to 180°C, a heat loss amount of the negative electrode plate located in the first region is m, and a heat loss amount of the negative electrode plate located in the second region is n, wherein m/n is greater than or equal to 50%.

2. The battery cell according to claim 1, wherein the m/n is 70% to 100%.

3. The battery cell according to claim 1 or 2, wherein a first included angle exists between the first direction and a second direction, and the first included angle is 70° to 90°.

4. The battery cell according to any one of claims 1 to 3, wherein the gel polymer electrolyte comprises a polymer matrix and an electrolyte, the polymer matrix is obtained by polymerization of polymer monomers, the polymer monomers comprise a first monomer and a second monomer, and the first monomer comprises at least two crosslinking sites.

5. The battery cell according to claim 4, wherein the crosslinking site comprises at least one of a double bond, a triple bond, and a cyclic ether.

6. The battery cell according to claim 4 or 5, wherein the first monomer comprises at least one of an acrylic monomer and an acrylate monomer.

7. The battery cell according to claim 6, wherein the first monomer satisfies one or more of the following conditions:

the acrylic monomer comprises at least one of acrylic acid, methacrylic acid, methyl methacrylate, butyl methacrylate, methyl acrylate, ethyl acrylate, hydroxyethyl acrylate, hydroxyethyl methacrylate, butyl acrylate, isodecyl acrylate, isooctyl acrylate, lauryl acrylate, isobornyl acrylate, isobornyl methacrylate, and ethoxyethoxyethyl acrylate; and
the acrylate monomer comprises at least one of cyanoacrylate, caprolactone acrylate, 2-phenoxyethyl acrylate, tetrahydrofurfuryl acrylate, ethoxylated tetrahydrofurfuryl acrylate, cyclic trimethylolpropane acrylate, 2-carboxyethyl acrylate, cyclohexyl acrylate, ethylene glycol diacrylate, ethylene glycol dimethacrylate, propylene glycol dimethacrylate, diethylene glycol diacrylate, diethylene glycol dimethacrylate, triethylene glycol diacrylate, triethylene glycol dimethacrylate, tetraethylene glycol diacrylate, tetraethylene glycol dimethacrylate, 1,4-butanediol diacrylate, 1,4-butanediol dimethacrylate, 1,3-butanediol diacrylate, 1,3-butanediol dimethacrylate, 1,6-hexanediol diacrylate, 1,6-hexanediol dimethacrylate, dipropylene glycol diacrylate, dipropylene glycol dimethacrylate, tripropylene glycol diacrylate, tripropylene glycol dimethacrylate, neopentyl glycol diacrylate, neopentyl glycol dimethacrylate, 2(propoxylated) neopentyl glycol diacrylate, ethylene glycol diacrylate oligomer, ethylene glycol dimethacrylate oligomer, propylene glycol dimethacrylate oligomer, cyclohexyl acrylate oligomer, methoxy polyethylene glycol acrylate, ethoxylated trimethylolpropane triacrylate, trimethylolpropane trimethacrylate, methoxy ethylene glycol methacrylate oligomer, pentaerythritol triacrylate, propoxylated glycerol triacrylate, tris(2-hydroxyethyl) isocyanurate triacrylate, di(trimethylolpropane) tetraacrylate, pentaerythritol tetraacrylate, 4(ethoxylated) pentaerythritol tetraacrylate, and dipentaerythritol hexaacrylate.

8. The battery cell according to any one of claims 4 to 7, wherein the second monomer comprises at least one of a carbonate monomer, a sulfate monomer, a sulfonate monomer, a phosphate monomer, a carboxylate monomer, a sulfone monomer, an amide monomer, a nitrile monomer, and an ether monomer.

9. The battery cell according to claim 8, wherein the second monomer satisfies one or more of the following conditions:

the carbonate monomer comprises at least one of vinylene carbonate, ethylene ethyl carbonate, ethylene carbonate, propylene carbonate, butylene carbonate, fluoroethylene carbonate, and chloroethylene carbonate;
the sulfate monomer comprises at least one of vinyl ethylene sulfite, vinyl sulfite, 4-methyl vinyl sulfate, and 4-ethyl vinyl sulfate;

the sulfonate monomer comprises at least one of 1,3-propylene sultone, 1,3-propane sultone, 1,4-butane sultone, and methylene methane disulfonate;

the phosphate monomer comprises at least one of dimethyl vinyl phosphate, diethyl vinyl phosphate, diethyl propenyl phosphate, diethyl butenyl phosphate, diethyl 1-butene-2-yl phosphonate, diethyl ethynyl phosphate, vinyl trifluoromethyl phosphate, vinyl-1-trifluoroethyl phosphate, diethyl fluorovinyl phosphate, and 1-trifluoropropenyl ethyl phosphate;

the carboxylate monomer comprises vinyl acetate;

the sulfone monomer comprises at least one of methyl vinyl sulfone, ethyl vinyl sulfone, cyclobutene sulfone, cyclobutane sulfone, and ethylene sulfoxide;

the amide monomer comprises acrylamide;

the nitrile monomer comprises at least one of acrylonitrile, succinonitrile, glutaronitrile, and adiponitrile; and

the ether monomer comprises at least one of 1,3-dioxolane, ethylene oxide, 1,2-propylene oxide, 4-methyl-1,3-dioxolane, tetrahydrofuran, 2-methyltetrahydrofuran, 1,4-dioxane, ethylene glycol dimethyl ether, ethylene glycol diglycidyl ether, and triethylene glycol divinyl ether.

10. The battery cell according to any one of claims 4 to 9, wherein a mass of the electrolyte is c, and a mass of the polymer matrix is b, wherein $c/(c+b)$ is 60% to 97%.

11. The battery cell according to claim 10, wherein the $c/(c+b)$ is 80% to 95%.

12. The battery cell according to any one of claims 1 to 11, further comprising a housing, wherein the housing is configured to seal the electrode assembly and the gel polymer electrolyte; and when a state of charge of the battery cell is less than 5%, a volume of the electrode assembly is $V_1$, and a volume of the battery housing is $V_2$, wherein $V_1/V_2$ is less than or equal to 92%.

13. The battery cell according to any one of claims 1 to 12, wherein the negative electrode plate comprises a negative electrode current collector and a negative electrode active material layer located on at least one side of the negative electrode current collector, the negative electrode active material layer comprises a negative electrode active material, and the negative electrode active material comprises at least one of natural graphite, artificial graphite, soft carbon, hard carbon, a silicon-based material, a tin-based material, and lithium titanate.

14. The battery cell according to claim 13, wherein the negative electrode active material satisfies one or more of the following conditions:

the silicon-based material comprises at least one of elemental silicon, silicon oxide, silicon-carbon composite, silicon-nitrogen composite, and a silicon alloy material; and

the tin-based material comprises at least one of elemental tin, tin oxide, and a tin alloy material.

15. A battery, comprising the battery cell according to any one of claims 1 to 14.

16. An electric apparatus, comprising the battery cell according to any one of claims 1 to 14 and/or the battery according to claim 15.

FIG. 1

FIG. 2

5

FIG. 3

5

FIG. 4

FIG. 5

FIG. 6

FIG. 7

FIG. 8

## INTERNATIONAL SEARCH REPORT

| International application No. |
| --- |
| **PCT/CN2024/076661** |

**A.    CLASSIFICATION OF SUBJECT MATTER**

H01M10/058(2010.01)i;  H01M10/0565(2010.01)i;  H01M10/0525(2010.01)i

According to International Patent Classification (IPC) or to both national classification and IPC

**B.    FIELDS SEARCHED**

Minimum documentation searched (classification system followed by classification symbols)

H01M10/-

Documentation searched other than minimum documentation to the extent that such documents are included in the fields searched

Electronic data base consulted during the international search (name of data base and, where practicable, search terms used)

CNTXT, ENTXT, CNKI, ISI, DWPI: 负极, 凝胶, 聚合物电解质, 热损失, 丙烯酸, 丙烯酸酯, 丙烯腈, 丙烯酰胺, 醋酸乙烯酯, 碳酸乙烯亚乙酯, 乙基乙烯基砜, negative pole, gel, polymer dielectric, thermal loss, acrylic acid, acrylate, acrylonitrile, acrylamide carbonate, sulphone

**C.    DOCUMENTS CONSIDERED TO BE RELEVANT**

| Category* | Citation of document, with indication, where appropriate, of the relevant passages | Relevant to claim No. |
| --- | --- | --- |
| X | CN 104380516 A (LG CHEMICAL LTD.) 25 February 2015 (2015-02-25) description, embodiment 3 | 1-11, 13-16 |
| X | WO 2015058480 A1 (SHENZHEN CAPCHEM TECHNOLOGY CO., LTD.) 30 April 2015 (2015-04-30) description, embodiment 1 | 1-7, 10-11, 13-16 |
| Y | WO 2015058480 A1 (SHENZHEN CAPCHEM TECHNOLOGY CO., LTD.) 30 April 2015 (2015-04-30) description, embodiment 1 | 8-9, 12-16 |
| Y | CN 116014224 A (HUNAN LIFANG NEW ENERGY SCIENCE & TECHNOLOGY CO., LTD.) 25 April 2023 (2023-04-25) description, embodiment 4 | 8-9, 12-16 |
| A | CN 114335716 A (BEIJING WELION NEW ENERGY TECHNOLOGY CO., LTD.) 12 April 2022 (2022-04-12) entire description | 1-16 |

☑ Further documents are listed in the continuation of Box C.          ☑ See patent family annex.

| | |
| --- | --- |
| *    Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **23 April 2024** | **05 September 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**EP 4 632 865 A1**

## INTERNATIONAL SEARCH REPORT

| | International application No. |
|---|---|
| | **PCT/CN2024/076661** |

### C. DOCUMENTS CONSIDERED TO BE RELEVANT

| Category* | Citation of document, with indication, where appropriate, of the relevant passages | Relevant to claim No. |
|---|---|---|
| A | WO 2020171483 A1 (UBATT INC. et al.) 27 August 2020 (2020-08-27)<br>entire description | 1-16 |

Form PCT/ISA/210 (second sheet) (July 2022)

20

## INTERNATIONAL SEARCH REPORT
### Information on patent family members

International application No.

**PCT/CN2024/076661**

| Patent document cited in search report | | | Publication date (day/month/year) | Patent family member(s) | | | Publication date (day/month/year) |
|---|---|---|---|---|---|---|---|
| CN | 104380516 | A | 25 February 2015 | JP | 2015528987 | A | 01 October 2015 |
| | | | | JP | 6102039 | B2 | 29 March 2017 |
| | | | | BR | 112014017468 | A2 | 13 June 2017 |
| | | | | KR | 20140097026 | A | 06 August 2014 |
| | | | | KR | 101633966 | B1 | 27 June 2016 |
| | | | | TW | 201448319 | A | 16 December 2014 |
| | | | | WO | 2014116082 | A1 | 31 July 2014 |
| | | | | EP | 2790260 | A1 | 15 October 2014 |
| | | | | US | 2014220427 | A1 | 07 August 2014 |
| WO | 2015058480 | A1 | 30 April 2015 | CN | 103570873 | A | 12 February 2014 |
| | | | | CN | 103570873 | B | 13 April 2016 |
| CN | 116014224 | A | 25 April 2023 | None | | | |
| CN | 114335716 | A | 12 April 2022 | US | 2023216087 | A1 | 06 July 2023 |
| | | | | EP | 4207418 | A2 | 05 July 2023 |
| | | | | EP | 4207418 | A3 | 09 August 2023 |
| WO | 2020171483 | A1 | 27 August 2020 | KR | 20200102613 | A | 01 September 2020 |

Form PCT/ISA/210 (patent family annex) (July 2022)